# EUROPÄISCHE PATENTANMELDUNG

(11) **EP 1 920 730 A2**
(43) Veröffentlichungstag der Anmeldung: **14.05.2008**
(21) Anmeldenummer: 07021490.3
(22) Anmeldetag: 05.11.2007
(51) Int. Cl.: A61C 8/00

(54) **Verfahren zum Ermitteln der Lage und Orientierung eines Zahnimplantats**

(30) Priorität: 07.11.2006 DE 102006052419
(71) Anmelder: etkon Centrum für dentale CAD/CAM-Technologie AG, 82166 Gräfelfing (DE)
(72) Erfinder: Holzner, Stephan, 80269 Hohenschäftlarn (DE); Weber, Gerhard, 86932 Pürgen (DE)
(74) Vertreter: Grünecker, Kinkeldey, Stockmair & Schwanhäusser Anwaltssozietät

(57) **Zusammenfassung**

Die Erfindung betrifft ein Verfahren zum Erfassen von Implantaten in einem Kiefer oder einer Implantatsabformung in einer Kieferabformung mit den Schritten: Einsetzen eines Messkörpers in das Implantat oder in die Implantatsabformung, Scannen des Kiefers oder der Abformung davon zusammen mit dem Messkörper, Ermitteln der Lage und Orientierung des Implantats in dem Kiefer oder der Kieferabformung mit den gewonnenen Scanndaten, wobei zum Ermitteln der Lage und Orientierung ein Datensatz, der die individuelle Form des Messkörpers wiedergibt, verwendet wird. Weiterhin betrifft die Erfindung ein Verfahren zum Ermitteln der Form eines Messkörpers durch Abscannen von zumindest einem Bereich, der in ein Implantat oder eine Implantatsabformung einsetzbar ist sowie von zumindest einem zweiten Bereich, der nach dem Einsetzen abscannbar ist, um die individuelle Form des Messkörpers zu ermitteln. Auch betrifft die Erfindung einen Messkörper zum Einsetzten in ein Implantat und/oder eine Abformung davon in Kombination mit einem Datensatz, der die individuelle Form des Messkörpers wiedergibt bzw. einen Satz von solchen Messkörpem sowie ein weiteres Verfahren und einen computerlesbaren Datenträger.

## Beschreibung

Bei der Herstellung von Zahnersatzteilen bzw. der Planung von Dentalversorgungen, bei denen ein Zahnersatzteil auf ein Implantat bzw. ein Abutment eines Implantats aufgesetzt werden soll, ergibt sich regelmäßig das Problem, dass die genaue Position des Implantats im Vergleich zum Rest der Zähne oder des Kiefers nicht bekannt ist.

Zum Herstellen von Zahnersatzteilen bzw. zur Planung einer Dentalversorgung wird oft ein Abdruck, wie beispielsweise ein Gipsabdruck eines Kiefers, hergestellt. Dieser Abdruck weist dann eine Implantatsabformung in einer Kieferabformung auf. Ein Implantat in einem Kiefer oder eine Implantatsabformung in einer Kieferabformung ist in der Regel nur schwer zu erfassen, da diese tief in dem Kiefer der Kieferabformung innenliegend angeordnet ist.

Es besteht daher die Möglichkeit, Messkörper in das Implantat oder in die Implantatsabformung in einer Kieferabformung einzusetzen und den Kiefer oder die Kieferabformung zusammen mit dem Messkörper optisch oder mechanisch abzuscannen und dann aus der ermittelten Lage und Orientierung des Messkörpers auf die Lage und Orientierung des Implantats im Kiefer oder in der Kieferabformung zurückzuschließen.

Hierfür sind hochpräzis gefertigte Messkörper nötig, um so auch mit der entsprechend benötigten hohen Präzision die Lage und Orientierung des Implantats in dem Kiefer bestimmen zu können.

Die hochpräzise Fertigung dieser Messkörper verursacht jedoch erhebliche Kosten.

Die Aufgabe der vorliegenden Erfindung ist es, die Erfassung von Implantaten oder Implantatsabformungen bei hoher Präzision mit möglichst wenig Kosten zu ermöglichen.

Diese Aufgabe wird gelöst mit einem Verfahren zum Erfassen von Implantaten nach Anspruch 1, einem Verfahren zum Ermitteln der Form eines Messkörpers nach Anspruch 8 sowie einem Messkörper nach Anspruch 9, einem Satz von Messkörpern nach Anspruch 15, einem Verfahren nach Anspruch 16 und einem computerlesbaren Datenträger nach Anspruch 17.

Bei dem Verfahren wird ein Messkörper verwendet, der in der Regel nicht hochpräzise gefertigt ist. Dies führt zu erheblichen Abweichungen der Formen von verschiedenen Messkörpern bzw. zu erheblichen Abweichungen von der vorgegebenen Sollform, so dass die Messkörper individuelle Formen aufweisen, die von Standardformen abweichen.

Um auch mit solchen Messkörpern eine präzise Erfassung von Implantaten oder Implantatsabformungen zu erreichen, wird ein Datensatz, der die individuelle Form des Messkörpers wiedergibt, zur Ermittlung der Lage und Orientierung verwendet.

Vor der Durchführung eines solchen Verfahrens kann daher beispielsweise ein Messkörper zunächst vermessen werden. Hiermit wird die individuelle Form des Messkörpers ermittelt. Dies kann beispielsweise mit einem Abscannen geschehen, sofern dies die nötige Präzision aufweist. Die gewünschte Präzision liegt im Bereich von 5 µm, bevorzugterweise 2 µm und noch bevorzugterweise bei 1 µm. Dies bedeutet, dass die reale Form des Messkörpers nicht mehr als 5 µm, 2 µm oder 1 µm von der ermittelten Form des Messkörpers abweicht.

Um Lage und Orientierung eines Implantats zu ermitteln wird ein solcher Messkörper in dem Implantat in einem Kiefer oder in die Implantatsabformung in einer Kieferabformung eingesetzt und diese Kombination dann abgescannt.

In der Regel erfolgt die Bestimmung der Lage und Orientierung des Implantats mit einem Computer. Auf diesem Computer können mehrere Datensätze von individuellen Formen von Messkörpern gespeichert sein. Einem Benutzer kann die Möglichkeit eröffnet werden, dem Computer mitzuteilen, welcher Datensatz hier verwendet werden soll, d.h. welcher Messkörper beim Scanvorgang eingesetzt war.

Da die Messkörper jedoch alle leicht verschiedene Abmessungen aufweisen bzw. auch Messkörper mit grundsätzlich verschiedenen Formen vorgesehen sein können, ist es ebenso möglich, dass der Computer durch Vergleichen mit den zur Verfügung stehenden Datensätzen, die auf dem Computer gespeichert sind, denjenigen Datensatz ermittelt, der die individuelle Form des Messkörpers wiedergibt, indem die gewonnenen Scandaten mit den gespeicherten Datensätzen verglichen werden.

Auch ist es möglich, dass zwei, drei oder vier Datensätze automatisch bestimmt werden, die den beim Scannen gewonnenen Daten am ehesten entsprechen und dass ein Benutzer dann auswählen kann, welcher dieser zwei, drei oder vier Datensätze die individuelle Form des verwendeten Messkörpers wiedergibt.

Die verschiedenen Messkörper können mit einer Identifikation, wie beispielsweise einer Nummer, Buchstaben oder Kombinationen daraus versehen sein, um die individuellen Messkörper so leicht voneinander unterscheiden zu können.

Derartige Identifikationen können auch bei dem Scanvorgang erfasst werden, so dass ein Computer bzw. eine Software auf dem Computer diese Identifikation erkennt und so den zu verwendenden Datensatz ermitteln kann.

Ist in einem Kiefer oder einer Kieferabformung mehr als ein Implantat oder eine Implantatsabformung vorhanden, so kann ein Messkörper nacheinander in die verschiedenen Implantate oder Implantatsabformungen eingesetzt werden, um die jeweilige Lage und Orientierung des Implantats oder der Implantatsabformung zu bestimmen.

Es ist jedoch auch möglich, dass gleichzeitig mehrere Messkörper eingesetzt sind und dann gleichzeitig oder nacheinander abgescannt werden.

Bei einem Verfahren zum Ermitteln der Form eines Messkörpers wird dieser zumindest in einem Bereich abgescannt, der in ein Implantat oder eine Implantatsabformung einsetzbar ist. Weiterhin wird ein zweiter Bereich abgescannt, der nach dem Einsetzen des Messkörpers in ein Implantat oder in eine Implantatsabformung abscanbar ist, da dieser noch optisch zugänglich verblieben ist. Mit diesem Verfahren kann die individuelle Form des Messkörpers ermittelt werden.

Es ist nicht nötig, die gesamte Form des Messkörpers zu kennen, da es ausreicht, lediglich den Teil zu kennen, der beim Scannen eines eingesetzten Messkörpers erfasst wird sowie denjenigen Teil, der mechanisch mit dem Implantat oder der Implantatsabformung in Kontakt kommt, da dies die beiden Bereiche sind, die zur Ermittlung der Lage und Position des Implantats oder der Implantatsabformung relevant sind.

Der Messkörper zum Einsetzen in ein Implantat und/oder eine Implantatsabformung wird zusammen mit einem Datensatz, der die individuelle Form des Messkörpers wiedergibt, zur Verfügung gestellt. Ein solcher Datensatz kann in elektronischer Form auf einem Datenträger oder auch per E-Mail oder als Datei im Internet oder in ähnlicher Weise zur Verfügung gestellt werden.

Der Messkörper hat einen Teil, der in ein Implantat oder eine Abformung davon einsetzbar ist, wobei dieser Teil rotationssymmetrisch oder nicht rotationssymmetrisch sein kann.

Bei mehreren Implantaten, die zum Befestigen beispielsweise einer Brücke vorgesehen sind, ist es vorteilhaft, wenn das Implantat mit seiner oberen Form, auf der ein Abutment oder Ähnliches aufgesetzt wird, rotationssymmetrisch ist, um die Dentalversorgung nicht geometrisch überzubestimmen.

Ist jedoch ein Implantat vorgesehen, auf das lediglich ein einzelnes Zahnersatzteil, wie eine Krone oder Ähnliches, aufgesetzt werden soll, so ist es vorteilhaft, wenn das Implantat im entsprechenden Bereich nicht rotationssymmetrisch ist, um so ein Verdrehen des Zahnersatzteils zu verhindern. Entsprechend ist es dann vorteilhaft, wenn auch der entsprechende Messkörper in dem entsprechenden Teil nicht rotationssymmetrisch ist.

Derjenige Teil des Messkörpers, der im eingesetzten Zustand abgescannt werden soll, umfasst vorzugsweise mindestens zwei, drei, vier, fünf, sechs, acht, zehn oder mehr ebene Flächen. Solche ebenen Flächen lassen sich in Scandaten leicht softwaremäßig erfassen, insbesondere die Kanten zwischen zwei ebenen Flächen. Auch Kugelformen oder auch Halbkugelformen oder andere Formen, wie Pyramidenkegel, Ringe, Nuten, Hülse oder Ähnliches, können eingesetzt werden, um dem Messkörper eine leicht identifizierbare Form zu geben.

Der Messkörper kann über einen Anschlag, wie etwa eine Anschlagsfläche, verfügen, die beim Einsetzen des Messkörpers mit dem oberen Ende des Implantats in Anschlag kommt, um so die Position des Messkörpers zu definieren. Dieser Anschlag ist vorzugsweise am Übergang zwischen dem Teil, der in das Implantat eingesetzt wird und dem Teil der im eingesetzten Zustand abgescannt wird, vorgesehen.

Ein Satz von verschiedenen Messkörpern kann Messkörper desselben Typs, d. h. für die selben Implantate umfassen, die jedoch alle zum Beispiel aufgrund von Fertigungstoleranzen leicht verschieden sind. Auch können in einem Satz verschiedene Messkörper für die selben Implantate vorgesehen sein, die jedoch grundsätzlich verschiedene Formen aufweisen. So kann beispielsweise ein Messkörper einen abzuscannenden Bereich mit einer sechseckigen Form und ein anderer mit einer drei-, vier- oder fünfeckigen Form aufweisen.

Auch kann ein Satz von Messkörpern Messkörper für verschiedene Implantate umfassen.

Bei einem Verfahren wird die Lage und Orientierung eines Bereichs eines Messkörpers in einem Scandatendatz ermittelt. Weiterhin wird daraus die Lage und Orientierung eines Implantats, in dem Scandatensatz unter Verwendung eines Datensatzes, der die individuelle Form des Messkörpers wiedergibt, ermittelt.

Ein Computerprogramm zur Durchführung dieses Verfahrens kann auf einem computerlesbaren Datenträger gespeichert sein.

Ausführungsformen der Erfindung sollen anhand der beiliegenden Figuren erläutert werden. Dabei zeigt:
- Figur 1:: verschiedene Varianten von Messkörpern;
- Figur 2:: eine Kieferabformung ohne Messkörper (Fig. 2a) und mit eingesetzten Messkörpern (Fig. 2b);
- Figur 3:: eine Kieferabformung zusammen mit einer Scanvorrichtung und einem Computer; und
- Figur 4:: eine schematische Darstellung der Ermittlung der Lage und Orientierung eines Implantats.

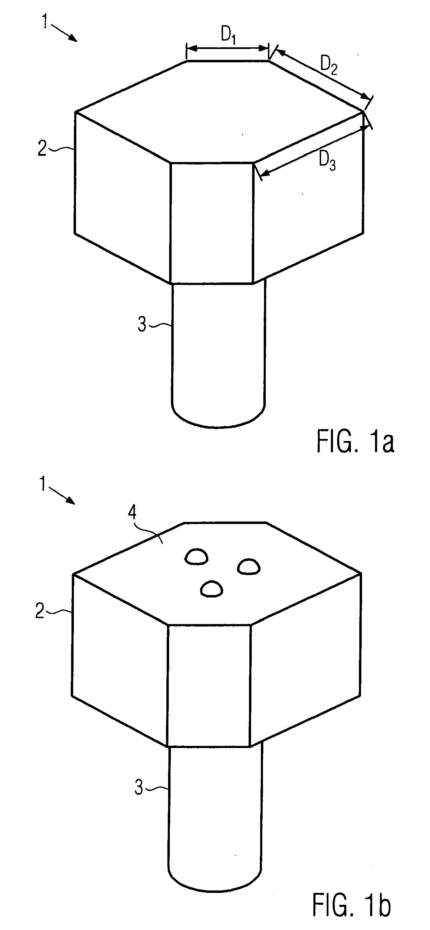

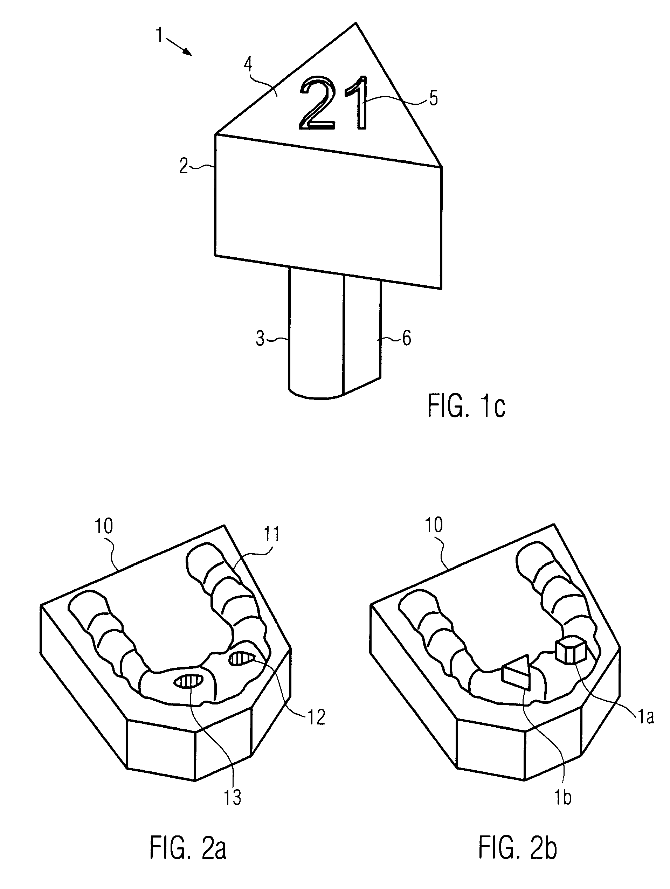

In Figur 1 a ist ein Messkörper 1 mit einem oberen hexagonalen Bereich und einem unteren rundstabförmigen Bereich 3 gezeigt. Der rundstabförmige Bereich 3 soll in ein Implantat oder eine Implantatsabformung eingesetzt werden und der obere hexagonale Bereich 2 dient zum Abscannen.

Ein Messkörper, bei dem beispielsweise die Abmessungen D1, D2 und D3, d.h. die Seiten des hexagonalen Bereichs exakt gleich lang sind bzw. mit einer Präzision von einigen µm gleich lang sind, ist sehr teuer.

Bei dem in Figur 1a dargestellten Messkörper sind daher die Abmessungen D1, D2 und D3 nicht alle gleich lang, sonder variieren vielmehr absichtlich bzw. aufgrund von Fertigungstoleranzen.

In Figur 1b ist ein Messkörper 1 gezeigt, bei dem zusätzlich auf der Oberfläche 4 Halbkugelelemente dargestellt sind, die zur Lageerkennung des Messkörpers und/oder zur Identifikation des Messkörpers dienen können. Derartige Halbkugelformen können beim Scannen gut erkannt und mit entsprechender Matching-Software gut ausgewertet werden, um die jeweilige Lage dieser 3 Halbkugeln (oder auch 1, 2, 4, 5 oder mehr Halbkugeln) exakt zu bestimmen.

Die Querschnittsform des Bereichs 2 muss nicht hexagonal sein. Sie kann auch elliptisch, kreisrund, dreieckig, viereckig, linsenförmig, fünfeckig, achteckig, polygonal oder sonst wie unregelmäßig geformt sein.

In Figur 1 c ist ein Beispiel von einem Messkörper 1 gezeigt, der einen dreieckigen Querschnitt im Bereich 2 hat.

Auch muss die Querschnittsfläche nicht entlang der Achse des Messkörpers konstant bleiben, sondern der Messkörper kann sich auch nach oben hin verjüngen oder verbreitern. Für ein Abscannen ist eine Verjüngung nach oben hin zu bevorzugen, da dann die Gefahr von abgeschalteten Bereichen, die nicht oder nur schlecht abgescannt werden können, vermieden wird.

Auf der Oberseite 4 in Figur 1c ist die Zahl 21 eingraviert. Sie ist hier in Form einer Vertiefung gegeben. Sie kann aber auch in einer Erhöhung gegeben sein.

Die Zahl 21 steht hier stellvertretend für jede beliebige alphanumerische oder sonstige (z. B. Barcodes) Identifikation des Messkörpers 1.

Der Vorteil einer solchen alphanumerischen Identifikation ist, dass zum Einen ein Benutzer den Messkörper leicht identifizieren kann und eine entsprechende Identifikation in einen Computer eingeben kann. Zum Anderen kann eine solche Identifikation auch unmittelbar bei dem Scanvorgang erfasst und von einem Computer erkannt werden, ohne dass es dann einer manuellen Eingabe bedürfe.

In Figur 1 c ist ein zusätzliches Detail gezeigt, das jedoch unabhängig von der Form des Bereichs 2 oder der Ausführung der Oberfläche 4 ist.

In Figur 1c ist nämlich gezeigt, dass der untere Bereich 3 auch nicht rotationssymmetrisch sein kann. (Im Gegensatz zu den Figuren 1 a und 1b.) In Figur 1 c ist dies durch eine Abflachung 6 des Rundstabs 3 gegeben.

Sämtliche anderen Formen, wie sie in Implantaten vorgegeben sind, können für den Bereich 3 vorgesehen sein.

In Figur 2a ist eine Kieferabformung 10 in Form eines Modells gezeigt. Der Kiefer erscheint hier im Wesentlichen zahnlos und hat lediglich einen Restzahnbereich 11.

In dem Bereich 11 sind zwei Öffnungen 12 und 13 zu erkennen, wobei sich in diesen Öffnungen weiter unten Implantatsabformungen befinden.

Wie in Figur 2a zu erkennen, sind diese Implantatsabformungen in Figur 2a optisch nur schwer zugänglich, so dass ihre Lage und Position mit einem einfachen Abscannen der Kieferabformung 10 nicht oder nur schlecht erkannt werden kann.

In Figur 2b ist die selbe Kieferabformung 10 mit zwei eingesetzten Messkörpern 1 a, 1b gezeigt.

Durch Abscannen der Kombination aus Figur 2b kann die Lage und Orientierung der Implantate in den Öffnungen 12 und 13 genau bestimmt werden.

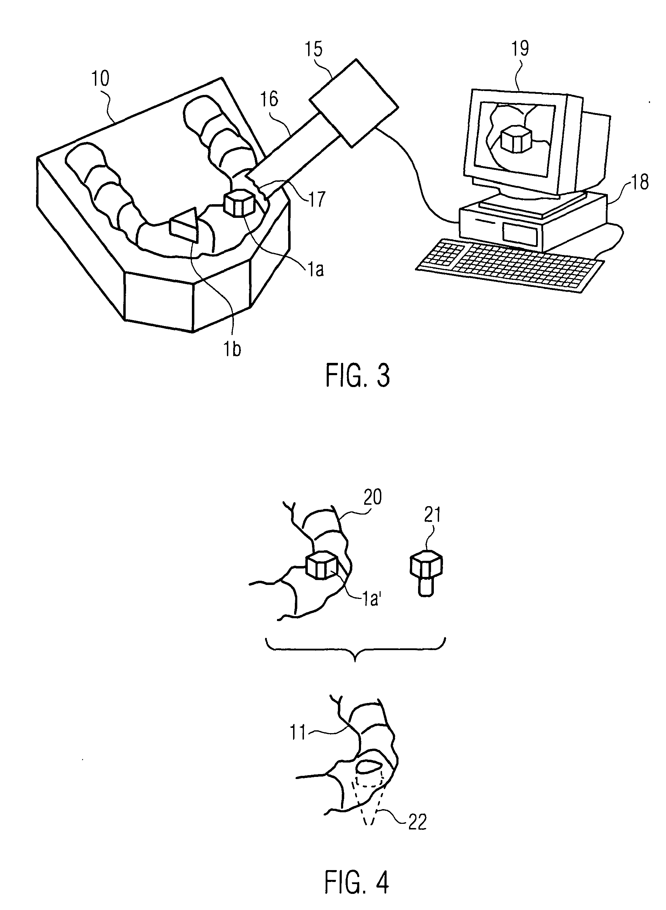

Ein entsprechender Scanvorgang bzw. eine entsprechende Scanvorrichtung ist in Figur 3 schematisch gezeigt. Der Scanner in Figur 3 ist beispielhaft ein optischer Scanner 15. Der optische Scanner 15 kann mit einem Abtastlichtstrahl 16 die Oberfläche der Kieferabformung 10 in einer Linienform 17 abtasten. Auch andere optische Scanner oder auch mechanische Tastköpfe können hier eingesetzt werden.

Die von dem Scanner 15 gewonnenen Daten werden an einen Computer 18 übertragen und können dort, z. B. auf einem Bildschirm 19, dargestellt werden.

In dem Computer 18 ist ein Datensatz, der die individuelle Form des Messkörpers 1 a und ein Datensatz, der die individuelle Form des Messkörpers 1 b wiedergibt, gespeichert.

In Figur 4 ist schematisch dargestellt, wie ein Datensatz 20, der mit dem Scanner 15 gewonnen wurde und ein Datensatz 21, der auf dem Computer 18 gespeichert ist, zusammengeführt werden, um einen Datensatz zu erhalten, der die Form des Restzahnbereichs 11 wiedergibt und zusätzlich die Lage und Orientierung eines Implantats 22 angibt. In dem Datensatz 20 wird die Lage und Orientierung des Messkörpers 1 a ermittelt, indem beispielsweise die verschiedenen ebenen Flächen des Hexagons erfasst werden und die so gewonnenen Scandaten mit dem Datensatz 21 auf dem Rechner 18 verglichen werden. Mit z. B. einem Matching-Verfahren kann der

Datensatz 21 in den Datensatz 20 eingepasst werden. Dadurch ergibt sich eine Relation zwischen dem Datensatz 20 und Teil des Datensatzes 21, der dem zweiten Bereich 3 des Messkörpers 1a entspricht. Aus dieser Information über die Position dieses zweiten Bereichs 3 kann dann auf die Position des entsprechenden Implantats 22 zurückgeschlossen werden.

In Figur 3 ist gezeigt, dass hier zwei verschiedene Messkörper 1a, 1b gleichzeitig eingesetzt sind. Es ist jedoch auch möglich, erst einen Messkörper 1 in die Öffnung 12 einzusetzen, dann abzuscannen und dann denselben Messkörper in die andere Öffnung 13 einzusetzen und wieder abzuscannen. Auch dann ist die Ermittlung von Lage und Orientierung des Implantats möglich.

Die bei verschiedenen Scanvorgängen erfassten Daten können auf dem Rechner 18 mit entsprechendem Matching-Verfahren zu größeren Datensätzen zusammengefasst werden. Dadurch kann dann beispielsweise auch die relative Lage der beiden Implantate der Öffnungen 12 und 13 zueinander sehr präzise bestimmt werden.

## Patentansprüche

1. Verfahren zum Erfassen von Implantaten in einem Kiefer oder einer Implantatsabformung in einer Kieferabformung mit den Schritten:
• Einsetzen eines Messkörpers in das Implantat oder in die Implantatsabformung
• Scannen des Kiefers oder der Abformung davon zusammen mit dem Messkörper
• Ermitteln der Lage und Orientierung des Implantats in dem Kiefer oder der Kieferabformung mit den gewonnenen Scanndaten
**dadurch gekennzeichnet, dass**
• zum Ermitteln der Lage und Orientierung ein Datensatz, der die individuelle Form des Messkörpers wiedergibt, verwendet wird.

2. Verfahren nach Anspruch 1, **dadurch gekennzeichnet, dass** ein Messkörper unabhängig von einem Kiefer oder einer Kieferabformung zumindest in einem Bereich, der in ein Implantat oder eine Implantatsabformung einsetzbar ist sowie zumindest in dem Bereich, der nach dem Einsetzen abscannbar ist, abgescannt wird, um die individuelle Form des Messkörpers zu ermitteln.

3. Verfahren nach Anspruch 2, **dadurch gekennzeichnet, dass** das Abscannen derart erfolgt, dass die Form des Messkörpers bis auf eine Genauigkeit von bis zu 5 µm, bevorzugterweise 2 µm und noch bevorzugterweise 1 µm ermittelt wird.

4. Verfahren nach einem der Ansprüche 1 bis 3, **dadurch gekennzeichnet, dass** das Ermitteln der Lage und Orientierung des Implantats oder der Implantatsabformung mit einem Computer erfolgt, dem von einem Benutzer mitgeteilt wird, welcher von mehreren Datensätzen die individuelle Form des Messkörpers wiedergibt.

5. Verfahren nach einem der Ansprüche 1 bis 4, **dadurch gekennzeichnet, dass** das Ermitteln der Lage und Orientierung des Implantats oder der Implantatsabformung mit einem Computer erfolgt, wobei der Computer so ausgebildet ist, dass durch ein Vergleichen der beim Scannen des Kiefers oder der Abformung davon zusammen mit dem Messkörper gewonnenen Daten mit auf dem Computer gespeicherten Datensätzen derjenige Datensatz ermittelt wird, der die individuelle Form des Messkörpers wiedergibt.

6. Verfahren nach einem der Ansprüche 1 bis 5, **dadurch gekennzeichnet, dass** die Schritte aus Anspruch 1 für zwei, drei oder mehr Implantate oder Implantatsabformungen nacheinander ausgeführt werden.

7. Verfahren nach einem der Ansprüche 1 bis 6, **dadurch gekennzeichnet, dass** mehrere Messkörper gleichzeitig eingesetzt sind und abgescannt werden.

8. Verfahren zum Ermitteln der Form eines Messkörpers durch Abscannen von zumindest einem Bereich, der in ein Implantat oder eine Implantatsabformung einsetzbar ist sowie von zumindest einem zweiten Bereich, der nach dem Einsetzen abscannbar ist, um die individuelle Form des Messkörpers zu ermitteln.

9. Messkörper zum Einsetzen in ein Implantat und/oder eine Abformung davon in Kombination mit einem Datensatz, der die individuelle Form des Messkörpers wiedergibt.

10. Messkörper nach Anspruch 9, **dadurch gekennzeichnet, dass** er zumindest in dem Teil, der in ein Implantat oder eine Abformung davon einsetzbar ist, rotationssymmetrisch ist.

11. Messkörper nach Anspruch 9, **dadurch gekennzeichnet, dass** er zumindest in dem Teil, der in ein Implantat oder eine Abformung davon einsetzbar ist, nicht rotationssymmetrisch ist.

12. Messkörper nach einem der Ansprüche 9 bis 11, **dadurch gekennzeichnet, dass** der Messkörper mindestens zwei, drei, vier, fünf, sechs, acht, zehn oder mehr ebene Flächen umfasst.

13. Messkörper nach einem der Ansprüche 9 bis 12, **dadurch gekennzeichnet, dass** der Messkörper mindestens eins, zwei, drei, vier, fünf, sechs oder mehr Kugelformen oder zumindest Teile davon, wie Halbkugelformen, umfasst.

14. Messkörper nach einem der Ansprüche 9 bis 13, **dadurch gekennzeichnet, dass** der Messkörper eine Identifikation umfasst, wie etwa eine alphanumerische Identifikation, wobei die Identifikation vorzugsweise durch die Form des Messkörpers gegeben ist.

15. Satz von verschiedenen Messkörpern nach einem der Ansprüche 9 bis 14.

16. Verfahren mit den Schritten:
• Ermitteln der Lage und Orientierung eines Bereichs (2) eines Messkörpers (1) in einem Scanndatensatz (20) und
• Ermitteln der Lage und Orientierung eines Implantats in dem Scanndatensatz unter Verwendung eines Datensatzes, der die individuelle Form des Messkörpers wiedergibt.

17. Computerlesbarer Datenträger mit Instruktionen an einen Computer zum Ausführen eines Verfahrens nach Anspruch 16.
